# EUROPÄISCHE PATENTANMELDUNG

(11) **EP 1 186 793 A1**
(43) Veröffentlichungstag der Anmeldung: **13.03.2002**
(21) Anmeldenummer: 00119550.2
(22) Anmeldetag: 07.09.2000
(51) Int. Cl.: F16D 65/12

(54) **Kombinierte Scheiben- und Trommelbremse mit einer innenbelüfteten Bremsscheibe**

(71) Anmelder: Dr.Ing. h.c.F. Porsche Aktiengesellschaft, 70435 Stuttgart (DE)
(72) Erfinder: Aydt, Günter, 71522 Backnang (DE)

(57) **Zusammenfassung**

Eine innenbelüftete Bremsscheibe (1) umfaßt zwei Reibringe (2,3) und eine Innenbackenbremse (5), wobei im innenliegenden Reibring (3) eine Ringnut (8) vorgesehen ist. Die Ringnut (8) weist im Grund (9) Durchtrittsöffnungen (10) zu Luftführungskanälen (7) zwischen den Reibringen (2,3) der Bremsscheibe auf, wobei eine dem Grund gegenüberliegende verengte Ringnutöffnung vorgesehen ist, an die sich gegenüberliegende Ringkanäle (11,12) innerhalb der Ringnut anschließen und ein von einem Abschirmblech (16) abgestelltes umlaufendes Wasserführungsblech (13) in die Ringnut zwischen die Ringkanäle ragt.

## Beschreibung

Die Erfindung bezieht sich auf eine innenbelüftete Bremsscheibe nach dem Oberbegriff des Anspruchs 1.

Aus der DE 38 24 917 A1 ist eine Bremstrommel mit einem Bremsring bekannt, an dem eine umlaufende Ausnehmung angeordnet ist, in welche ein Blech hineinragt, damit ein Spritzwassereintritt in die Trommel verhindert und ein Spritzwasseraustritt verbessert wird.

Aufgabe der Erfindung ist es, bei einer innenbelüfteten Bremsscheibe mit einer in der Bremstrommel angeordneten Innenbackenbremse ein Eindringen von Wasser auf die Lauffläche der Innenbackenbremse zu verhindern und einen gezielten Wasseraustritt zu gewährleisten.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Luftführungskanäle in der innenbelüfteten Bremsscheibe Wasser, Wassertropfen und dergleichen nach außen abfließen kann und ein Eindringen von Wasser, Wassertropfen und dergleichen in die Innenbackenbremse, insbesondere auf die Innenfläche der Bremstrommel verhindert wird.

Damit die Flüssigkeit nach außen abfließen kann, ist im inneren Reibring der Bremsscheibe eine Ringnut vorgesehen, die im Grund Durchtrittsöffnungen zu Luftführungskanälen zwischen den Reibringen aufweist. Die Ringnut weist eine dem Grund gegenüberliegende verengte Nutöffnung auf, an die sich gegenüberliegende Ringkanäle in der Ringnut anschließen. Ein von einem Abschirmblech abgestelltes umlaufendes Wasserführungsblech, ein sogenannter Kragen, ragt in die Ringnut zwischen die Ringkanäle und teilt diese in etwa hälftig auf.

Die meist von oben in die Luftführungskanäle eintretende Flüssigkeit oder dgl. wird durch Öffnungen zwischen den Kanalrippen in den inneren Ringkanal, auch Wasserablaufrinne genannt, geleitet. Das Wasserführungsblech besteht aus einem sogenannten Kragen und bildet durch seine schräge Anstellung in dieser Wassereintrittsposition eine relativ große Öffnung. Bei einer Wasseraustrittsposition leitet der Kragen des Führungsbleches das Wasser zu den Öffnungen in die Luftführungskanäle, von denen es dann nach außen abfließen kann.

Das Führungsblech ist mit seiner Stirnkante in einem geringen Abstand zum Grund der Ringnut bzw. zu den Öffnungen angeordnet, damit das Wasser gezielt durch die Öffnungen abfließen kann und eine labyrinthartige Abschirmung zur Innenbackenbremse erzielt wird.

Das Führungsblech bildet in der Wassereintrittsposition einerseits einen ersten Ringraum zwischen dem Abschirmblech, dem Führungsblech und dem Ringkanal und andererseits einen zweiten Ringraum zwischen dem Führungsblech und dem weiteren Ringkanal.

Hierdurch kann das zwischen dem inneren Reibring und dem Abschirmblech in den äußeren Ringkanal eintretende Wasser und gleichzeitig kann das durch den Luftführungskanal in den inneren Ringkanal und eintretende Wasser durch die Öffnungen in den Luftführungskanälen nach außen abgeführt werden.

Ein Ausführungsbeispiel der Erfindung ist in den Zeichnungen dargestellt und wird im folgenden näher beschrieben.

Es zeigen
- Fig. 1: einen Schnitt durch eine innenbelüftete Bremsscheibe mit Ringkanälen und einer Innenbackenbremse in einer Wassereintrittsposition und
- Fig. 2: einen Schnitt durch die innenbelüftete Bremsscheibe mit Ringkanälen und einer Innenbackenbremse in einer Wasseraustrittsposition.

Eine innenbelüftete Bremsscheibe 1 umfaßt im wesentlichen zwei Reibringe 2, 3, die mit einer Bremstrommel 4 verbunden sind. In dieser ist eine Innenbackenbremse 5 angeordnet.

Die beiden Reibringe 2, 3 weisen radiale Querrippen 6 über den Umfang auf, welche zwischen den Reibringen 2, 3 Luftführungskanäle 7 bilden.

Der innenliegende eine Reibring 3 der Bremsscheibe 1 ist mit einer Ringnut 8 versehen, die koaxial zur Bremstrommel 4 angeordnet ist. Diese Ringnut 8 ist am unteren Ende der Luftführungskanäle 7, die Bremstrommel 4 tangierend, vorgesehen und zu diesen über im Grund 9 vorgesehene Öffnungen 10 durchgängig verbunden.

Die Ringnut 8 weist in ihrer Seitenwandung gegenüberstehende Ringkanäle 11, 12, sogenannte Wasserablaufrillen auf, welche die lichte Öffnung der Nut durch Stege 14, 15 verengen. Über ein beabstandet zum inneren Reibring 3 angeordnetes Abschirmblech 16 ist die Bremsscheibe 1 geschützt. Am Abschirmblech 16 ist ein Wasserführungsblech 13, ein sogenannter Kragen vorgesehen, der in die Ringnut 8 zwischen die beiden Ringkanäle 11, 12 hineinragt.

Das Wasserführungsblech 13 ist wie die Zeichnungen zeigen, schräg unter einem Winkel angestellt und erstreckt sich bis nahe zum Grund 9 bzw. zu den Öffnungen 10 zwischen die Querrippen 6 der Bremsscheibe 1.

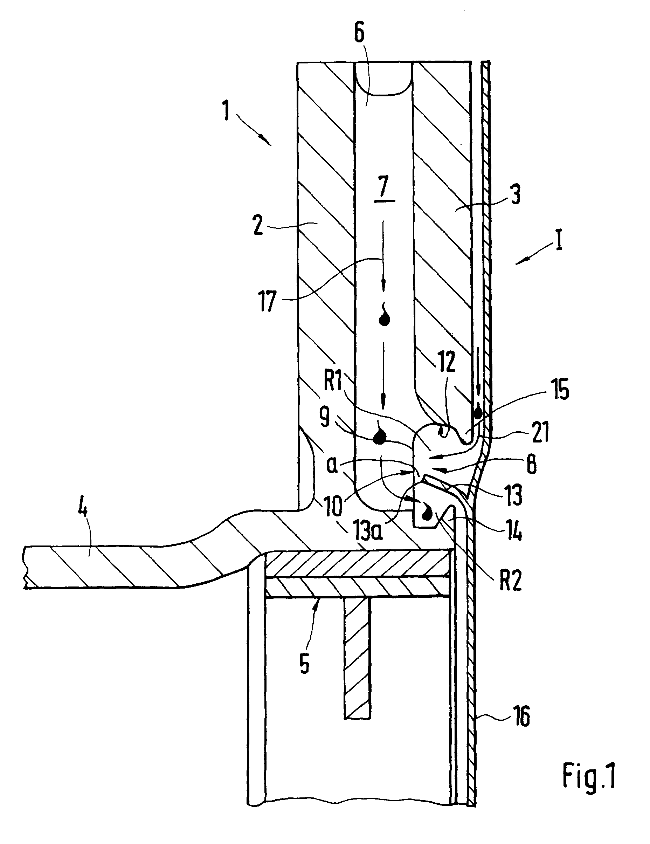

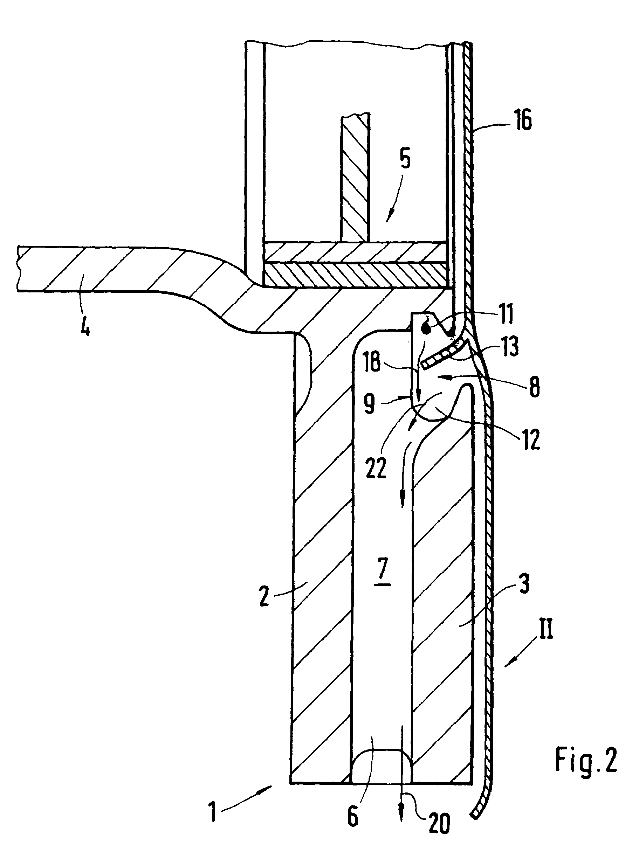

In Fig. 1 ist eine Wassereintrittsposition I dargestellt, d.h. der Wassereintritt erfolgt etwa in vertikaler Position der Bremsscheibe 1, wobei auch in weiteren Positionen Wasser bzw. Wassertropfen in die Luftführungskanäle 7 gelangen können. Das Wasser fließt in Pfeilrichtung 17 durch die Öffnungen 10 in den inneren Ringkanal 11 und von hier aus in Pfeilrichtung 18 (Fig. 2) durch die Öffnungen 10 in die Luftführungskanäle 7 in Pfeilrichtung 20 nach außen.

Im Bereich zwischen dem Abschirmblech 16 und dem inneren Reibring 3 eintretendes Wasser bzw. Wassertropfen fließen in Pfeilrichtung 21 in den Ringkanal 12 und direkt in Pfeilrichtung 22 durch die Öffnungen 10 in die Luftführungskanäle 7 nach außen.

Durch das abgestellte Wasserführungsblech 13 wird somit eine labyrinthartige Abschirmung zur Innenbackenbremse 5 und darüber hinaus eine gezielte Wasserführung durch die Luftführungskanäle 7 nach außen erzielt.

Die Ringkanäle können einen Querschnitt aufweisen, der beispielsweise dreieckförmig, U-förmig und halbkreisförmig ausgerundet ausgebildet sein kann.

## Patentansprüche

1. Innenbelüftete Bremsscheibe mit zwei Reibringen und einer in einer Bremstrommel angeordneten Innenbackenbremse, wobei im inneren Reibring eine Ringnut vorgesehen ist, **dadurch gekennzeichnet, daß** die Ringnut (8) im Grund (9) Durchtrittsöffnungen (10) zu Luftführungskanälen (7) zwischen den Reibringen (2, 3) aufweist und eine dem Grund (9) gegenüberliegende verengte Nutöffnung vorgesehen ist, an die sich gegenüberliegende Ringkanäle (11,12) innerhalb der Ringnut (8) anschließen und ein von einem Abschirmblech (16) abgestelltes umlaufendes Wasserführungsblech (13) in die Ringnut (8) und zwischen die beiden Ringkanäle (11, 12) ragt.

2. Innenbelüftete Bremsscheibe nach Anspruch 1, **dadurch gekennzeichnet, daß** das abgestellte Wasserführungsblech (13) unter einem Winkel zum ersten Ringkanal (11) derart angestellt ist, daß in einer etwa vertikalen Wassereintrittsposition (I) das Führungsblech (13) unter einem spitzen Winkel zum Ringnutgrund (9) angestellt ist und gleichzeitig in einer etwa vertikalen Wasseraustrittsposition (II) das Führungsblech (13) eine Ablaufschräge bildet.

3. Innenbelüftete Bremsscheibe nach den Ansprüchen 1 oder 2, **dadurch gekennzeichnet, daß** das Führungsblech (13) mit seiner Stirnkante (13a) in einen Abstand (a) zum Grund (9) der Ringnut (8) angeordnet ist.

4. Innenbelüftete Bremsscheibe nach den Ansprüchen 1, 2 oder 3, **dadurch gekennzeichnet, daß** das Führungsblech (13) in der Wassereintrittsposition (I) einerseits einen ersten Ringraum (R1) zwischen dem Abschirmblech (16), dem Führungsblech (13) und dem Ringkanal (12) und andererseits ein zweiter Ringraum (R2) zwischen dem Führungsblech (13) und dem weiteren Ringkanal (12) bildet.

5. Innenbelüftete Bremsscheibe nach einem oder mehreren der vorhergehenden Ansprüche, **dadurch gekennzeichnet, daß** die Luftführungskanäle (7) zwischen Querrippen (6) der beiden Reibscheiben (2, 3) im Bereich der Bremstrommel die Durchtrittsöffnungen (10) aufweisen, welche in die Ringnut (8) einmünden und die Luftführungskanäle (7) wasserabführende Kanäle bilden.
